# EUROPÄISCHE PATENTSCHRIFT

(11) **EP 3 082 406 B1**
(45) Veröffentlichungstag und Bekanntmachung des Hinweises auf die Patenterteilung: **18.11.2020**
(21) Anmeldenummer: 14816207.6
(22) Anmeldetag: 15.12.2014
(51) Int. Cl.: A01J 5/01, F16K 11/07, A01J 7/02

(54) **SICHERHEITSVENTIL**
SAFETY VALVE
VANNE DE SÉCURITÉ

(30) Priorität: 20.12.2013 DE 102013114595
(43) Veröffentlichungstag der Anmeldung: 26.10.2016
(73) Patentinhaber: GEA Farm Technologies GmbH, 59199 Bönen (DE)
(72) Erfinder: BALKENHOL, Reinhard, 33098 Paderborn (DE)
(74) Vertreter: Kleine, Hubertus
(86) Internationale Anmeldenummer: PCT/EP2014/077684
(87) Internationale Veröffentlichungsnummer: WO 2015/091319

(56) Entgegenhaltungen:
- US-A- 3 797 525
- US-A1- 2012 017 836

## Beschreibung

Die Erfindung betrifft ein Sicherheitsventil nach dem Oberbegriff der Ansprüche 1 und 2.

Derartige Sicherheitsventile werden auch als Block-Bleed-Block-Ventile bezeichnet und in Reinigungsvorrichtungen für Melkanlagen, insbesondere zum automatischen Melken von milchgebenden Tieren, beispielsweise Kühe, Schafe, Ziegen, eingesetzt. Der automatische Melkvorgang kann mittels so genannter Melkroboter durchgeführt werden. Das Sicherheitsventil zum Einbringen einer so genannten Dip-Flüssigkeit auf die Zitze eines milchgebenden Tieres benötigt.

Es sind einschlägige nationale Vorschriften und Richtlinien, z.B. die amerikanischen FDA-Richtlinien, zu beachten und einzuhalten, welche für Reinigungsvorrichtungen für Melkanlagen und Melkausrüstungen, die mit Milch in Kontakt kommen, gelten.

Das Sicherheitsventil umfasst zwei Blockventile und ein Bleedventil und wird aus einer ersten Schaltstellung, die im Weiteren Blockstellung genannt wird, in eine zweite Schaltstellung, die im Weiteren Durchlassstellung genannt wird, und zurück verstellt.

In der Blockstellung müssen gleichzeitig die Blockventile geschlossen und das Bleedventil geöffnet sein, wobei in der Durchlassstellung die Blockventile geöffnet sind und das Bleedventil geschlossen ist.

Das Dokument US 2012/0017836 A1 beschreibt ein Sicherheitsventil für eine Reinigungsvorrichtung für eine automatische Melkanlage. Weiterhin ist die Beschreibung der Funktion und des Aufbaus einer Reinigungsvorrichtung in dem Dokument WO 2010/053577 A1 angegeben.

In dem Dokument US 2012/0017836 A1 wird eine Milchwirtschafts-Melkanlage mit Milchleitungsschutzsystem und -verfahren beschrieben. Es wird ein Sicherheitsventil für eine Reinigungsvorrichtung für eine Melkanlage zum Melken von milchgebenden Tieren angegeben. Das Sicherheitsventil weist ein erstes Blockventil mit einem Eingang, ein zweites Blockventil mit einem Ausgang, ein Bleed-Ventil mit einem Bleedausgang, einen Kolben und eine Antriebseinheit auf, wobei das Sicherheitsventil von einer Blockstellung, in welcher das erste Blockventil und das zweite Blockventil zur Blockierung des Eingangs und des Ausgangs geschlossen sind und das Bleed-Ventil zur Verbindung des Bleedausgangs mit einer Verbindung geöffnet ist, in eine Durchlassstellung, in welcher das erste Blockventil und das zweite Blockventil zur Verbindung des Eingangs über die Verbindung mit dem Ausgang geöffnet sind und das Bleed-Ventil zur Blockierung des Bleedausgangs geschlossen ist, und zurück verstellbar ausgebildet ist. Das Sicherheitsventil ist als ein Wegeventil ausgebildet, wobei der Kolben ein Hohlkolben ist.

Aufgrund der immer weiter steigenden Anforderungen, insbesondere nach hohen Durchsatzzahlen und kontinuierlichem, wartungsarmen Betrieb bzw. mit langen Wartungsintervallen bei heutigen Reinigungsvorrichtungen für Melkanlagen bzw. Melkroboter, die komplex und kostenaufwendig sind, besteht der Bedarf für ein verbessertes Sicherheitsventil.

Die bisherigen vorgeschlagenen Lösungen weisen einen zu großen Bauraum, zu hohe Kosten und geringe bis unzureichende Beständigkeiten gegenüber den verwendeten Medien auf.

Vor diesem Hintergrund besteht die Aufgabe der Erfindung darin, ein verbessertes Sicherheitsventil zu schaffen.

Diese Aufgabe wird durch ein Sicherheitsventil mit den Merkmalen der Ansprüche 1 und 2 gelöst.

Ein erfindungsgemäßes Sicherheitsventil gemäß Anspruch 1 für eine Reinigungsvorrichtung für eine Melkanlage zum Melken von milchgebenden Tieren, umfasst ein erstes Blockventil mit einem Eingang, ein zweites Blockventil mit einem Ausgang, ein Bleed-Ventil mit einem Bleedausgang, einen Kolben und eine Antriebseinheit, wobei das Sicherheitsventil von einer Blockstellung, in welcher das erste Blockventil und das zweite Blockventil zur Blockierung des Eingangs und des Ausgangs geschlossen sind und das Bleed-Ventil zur Verbindung des Bleedausgangs mit einer Verbindung geöffnet ist, in eine Durchlassstellung, in welcher das erste Blockventil und das zweite Blockventil zur Verbindung des Eingangs über die Verbindung mit dem Ausgang geöffnet sind und das Bleed-Ventil zur Blockierung des Bleedausgangs geschlossen ist, und zurück verstellbar ausgebildet ist. Das Sicherheitsventil ist als ein Wegeventil ausgebildet, wobei der Kolben ein Hohlkolben ist und einen Hohlraum als Verbindung aufweist. Das Sicherheitsventil weist einen Ventilkörper eines 5/2-Wegeventils mit dem Hohlkolben auf, wobei in einer Innenbohrung des Ventilkörpers alternierend sechs Dichtungen und fünf Abstandshalter zwischen zwei Halteflanschen eingesetzt sind, wobei jeder der Abstandshalter zwischen zwei der Dichtungen angeordnet ist und wobei die Dichtungen gleichzeitig mit ihrem Außendurchmesser an der Wand der Innenbohrung und mit ihrem Innendurchmesser Abschnitte des Hohlkolbens abdichten. Der Eingang ist in der Blockstellung mit einem Zusatzanschluss verbunden, wobei der Zusatzanschluss mit einer Düse verengt ist, wobei ein Austrittsquerschnitt der Düse wesentlich geringer ist als ein Querschnitt des Zusatzanschlusses.

Damit wird vorteilhaft erreicht, dass ein handelsübliches, kostengünstiges Wegeventil mit hoher Qualität als Basis verwendet werden kann. Der Kolben wird durch einen Hohlkolben gebildet.

Da der Hohlkolben einen Hohlraum als Verbindung aufweist, wird eine besonders günstige, raumsparende Ausführung ermöglicht.

Zudem wird mittels des Zusatzanschlusses, der mit einer Düse verengt ist, der Vorteil einer Belüftung des Eingangs erzielt, um einen Volumenstrom zur Verhinderung eines unerwünschten Milchflusses in den Dipschlauch bzw. die Leitung des Dipmediums zu ermöglichen. Ein weiterer Vorteil besteht darin, dass ein so genanntes Kopfraumvolumen am Zitzenkopf reduziert werden kann.

In einer alternativen Ausführung weist ein erfindungsgemäßes Sicherheitsventil gemäß Anspruch 2 für eine Melkanlage zum Melken von milchgebenden Tieren, ein erstes Blockventil mit einem Eingang, ein zweites Blockventil mit einem Ausgang, ein Bleed-Ventil mit einem Bleedausgang, einen Kolben und eine Antriebseinheit auf, wobei das Sicherheitsventil von einer Blockstellung, in welcher das erste Blockventil und das zweite Blockventil zur Blockierung des Eingangs und des Ausgangs geschlossen sind und das Bleed-Ventil zur Verbindung des Bleedausgangs mit einer Verbindung geöffnet ist, in eine Durchlassstellung, in welcher das erste Blockventil und das zweite Blockventil zur Verbindung des Eingangs über die Verbindung mit dem Ausgang geöffnet sind und das Bleed-Ventil zur Blockierung des Bleedausgangs geschlossen ist, und zurück verstellbar ausgebildet ist. Das Sicherheitsventil ist als ein Wegeventil ausgebildet, wobei der Kolben ein Hohlkolben ist und einen Hohlraum als Verbindung aufweist. Das Sicherheitsventil weist einen Ventilkörper eines 5/2-Wegeventils mit dem Hohlkolben auf, wobei in einer Innenbohrung des Ventilkörpers alternierend sechs Dichtungen und fünf Abstandshalter zwischen zwei Halteflanschen eingesetzt sind, wobei jeder der Abstandshalter zwischen zwei der Dichtungen angeordnet ist und wobei die Dichtungen gleichzeitig mit ihrem Außendurchmesser an der Wand der Innenbohrung (statisch) und mit ihrem Innendurchmesser Abschnitte des Hohlkolbens abdichten. Der Hohlraum des Hohlkolbens ist in der Blockstellung über eine erste Öffnung mit dem Bleedausgang und über eine zweite Öffnung mit einem Zusatzanschluss verbunden.

In dieser alternativen Ausführung ist der Hohlraum des Hohlkolbens in der Blockstellung über eine erste Öffnung mit dem Bleedausgang und über eine zweite Öffnung mit einem Zusatzanschluss verbunden. Auf diese Weise lässt sich der Hohlraum besonders vorteilhaft entlüften/belüften bzw. spülen und/oder reinigen, z.B. mit einem oder mehreren Medien.

Es ist vorgesehen, dass sich der Hohlraum in Richtung einer Kolbenlängsachse des Hohlkolbens erstreckt. Damit wird eine einfache Fertigung ermöglicht. Der Hohlkolben wird aus einem gegenüber den verwendeten Medien resistenten Werkstoff, z.B. Edelstahl, hergestellt. Der Werkstoff kann natürlich auch ein Kunststoff mit entsprechender Beständigkeit sein. Auch Kombinationen aus verschiedenen Werkstoffen sind natürlich möglich. Insbesondere gegenüber Jod und Jodverbindungen, die in den Medien enthalten sein können, kann eine höhere Lebensdauer erzielt werden.

In einer Weitergestaltung der Ausführung umfasst der Hohlraum eine erste Öffnung und eine zweite Öffnung. Hierdurch ist eine einfache Ausbildung der Ventile möglich.

In einer weiteren Ausführung sind in der Blockstellung das erste Blockventil und das zweite Blockventil zur Blockierung des Eingangs und des Ausgangs durch den Hohlkolben geschlossen sind und das Bleed-Ventil verbindet den Bleedausgang mit dem Hohlraum des Hohlkolbens. Dies ist vorteilhaft mit dem Hohlkolben möglich. Dabei ergeben sich weitere Vorteile darin, dass bei eventuellen Undichtigkeiten in einfacher Weise sichergestellt ist, dass kein Medium von dem Eingang unkontrolliert in den Ausgang gelangt.

In einer weiteren Ausführung kann in der Durchlassstellung das erste Blockventil über die erste Öffnung mit dem Hohlraum des Hohlkolbens und das zweite Blockventil über die zweite Öffnung mit dem Hohlraum des Hohlkolbens zur Verbindung des Eingangs mit dem Ausgang kommunizieren, und das Bleed-Ventil ist zur Blockierung des Bleedausgangs durch den Hohlkolben geschlossen. Auf diese Weise sind vorteilhaft ohne zusätzliche Bauteile mehrere Funktionen in dem Hohlkolben vereint. Es wird nur der Hohlkolben benötigt. Dichtungen und Abstandselemente eines üblichen Wegeventils können verwendet werden. Deren Werkstoff muss lediglich eine geeignete Medienbeständigkeit aufweisen.

In einer noch weiteren Ausführung ist vorgesehen, dass der Hohlkolben mit einem Antriebselement zur Verstellung des Hohlkolbens aus der Blockstellung in die Durchlassstellung des Sicherheitsventils und zurück verbunden ist. Dies kann vorteilhaft ein Pneumatik- oder/und Elektroantrieb sein.

In einer anderen Ausführung weist das Sicherheitsventil ein vorgespanntes Kraftspeicherelement auf, welches den Hohlkolben in die Blockstellung vorspannt und in der Blockstellung hält. So ist die Blockstellung in einfacher Weise als eine Grund- und Sicherheitsstellung möglich.

In einer noch weiteren Ausführung weist das Sicherheitsventil eine Sensoreinheit zur Erfassung der Blockstellung oder/und der Durchlassstellung auf. Wenn diese Sensoreinheit mit dem Hohlkolben direkt oder/und indirekt über ein Antriebselement zusammenwirkt, ist eine besonders vorteilhafte Überwachung des Sicherheitsventils mit der Sensoreinheit möglich, da unabhängig von einer aktivierten oder nicht aktivierten Antriebseinheit die aktuelle Stellung des Hohlkolbens erfasst werden kann.

Dazu kann beispielsweise die Sensoreinheit einem Magnetelement, das an dem Hohlkolben oder/und dem Antriebselement angebracht ist, zusammenwirken. Es wird ein kompakter Aufbau mit hoher Zuverlässigkeit möglich.

In einer Ausführung weist das Sicherheitsventil einen Ventilkörper eines 3/2-Wegeventils mit dem Hohlkolben auf. Ein solcher Ventilkörper einschließlich seiner Dichtungen ist kostengünstig und in hoher Qualität am Markt erhältlich. Insbesondere bei einem modularen Aufbau können viele Einsatzfälle möglich werden.

In alternativer Ausführung kann das Sicherheitsventil einen Ventilkörper eines 5/2-Wegeventils mit dem Hohlkolben aufweisen. Damit wird einerseits ein besonderer Schutz des Kraftspeicherelementes (z.B. eine Druckfeder) aufgrund bauartbedingter längerer Kriechwege des Mediums bei Undichtigkeiten und andererseits aufgrund von Zusatzanschlüssen möglich.

Das Sicherheitsventil kann bis auf den Hohlkolben und Sensoreinheit aus Kunststoff bestehen. Auch die Schrauben bzw. Befestigungselemente von Deckeln, Antriebseinheit und Sensoreinheit können aus Kunststoff sein. Dadurch werden ein geringes Gewicht und eine kompakte Bauform erzielt.

Mehrere Sicherheitsventile können aufgrund des üblichen Ventilgehäuses in einfacher Weise miteinander verbunden und als Sicherheitsventilanordnung kompakt verwendet werden.

Weitere Vorteile und Einzelheiten gehen aus dem in den Figuren der Zeichnung dargestellten Ausführungsbeispiel hervor. Hierbei zeigen:
- Figur 1: eine schematische Darstellung eines beispielhaften Einsatzfalls eines erfindungsgemäßen Sicherheitsventils zusammen mit einer Sicherheitsventilvorrichtung;
- Figur 2: erfindungsgemäße Sicherheitsventile in einer Pre-Dip-/Post-Dip-Vorrichtung in einer schematischen Blockdarstellung;
- Figur 3-3c: schematische Schnittansichten und Schaltbilder eines üblichen Wegeventils in unterschiedlichen Schaltstellungen;
- Figur 4-4c: schematische Schnittansichten und Schaltbilder eines Beispiels eines Sicherheitsventils in unterschiedlichen Schaltstellungen;
- Figur 5: eine schematische Perspektivansicht eines üblichen Kolbens;
- Figur 6: eine schematische Perspektivansicht eines Hohlkolbens;
- Figur 7: eine schematische Schnittansicht eines Ausführungsführungsbeispiels des erfindungsgemäßen Sicherheitsventils;
- Figuren 8-8a: schematische Schnittansichten einer Variante des Ausführungsführungsbeispiels nach Figur 7 in unterschiedlichen Schaltstellungen; und
- Figuren 9-9a: schematische Perspektivansichten der Variante des Ausführungsführungsbeispiels nach Figuren 8-8a.

In den Figuren sind gleiche bzw. ähnliche Funktionselemente und Bauteile mit gleichen Bezugszeichen versehen.

Die Begriffe "oben", "unten", "links", "rechts" beziehen sich auf die jeweilige Anordnung in den Figuren. Eine Einbaulage, z.B. auf dem Kopf, seitlich oder in einer anderen Lage, ist darauf nicht eingeschränkt.

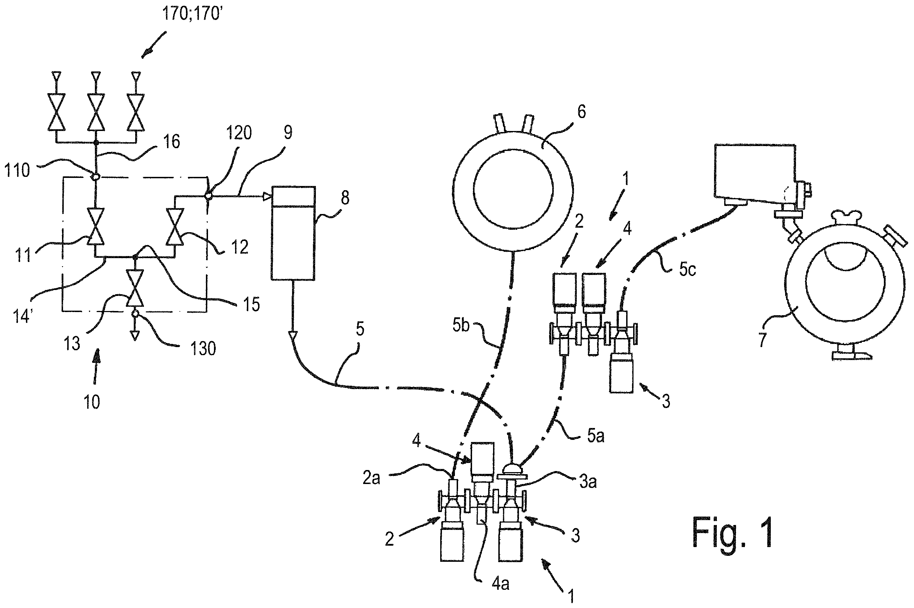

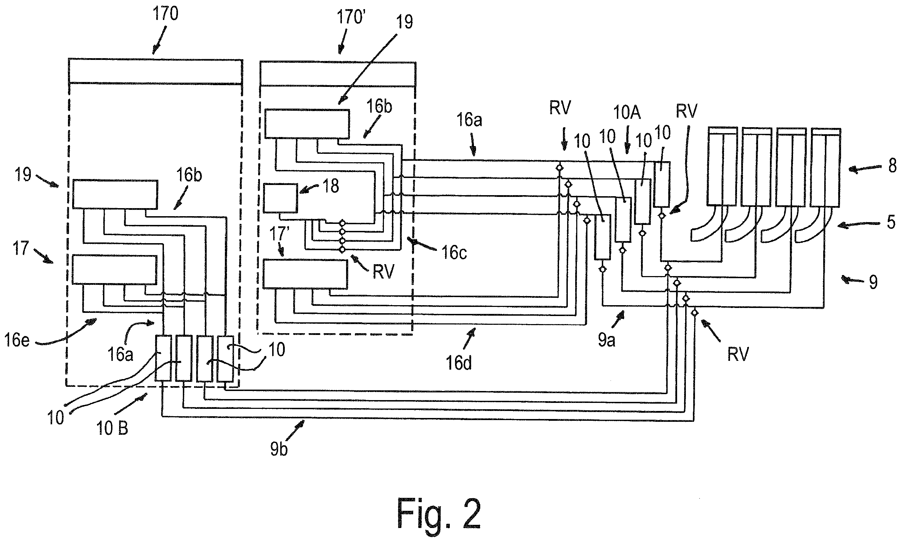

In Figur 1 ist eine schematische Darstellung eines beispielhaften Einsatzfalls eines erfindungsgemäßen Sicherheitsventils 10 zusammen mit einer Sicherheitsventilvorrichtung 1 gezeigt. Figur 2 zeigt erfindungsgemäße Sicherheitsventile 10 in einer Pre-Dip-/Post-Dip-Vorrichtung in einer schematischen Blockdarstellung.

Es sind zwei Sicherheitsventilvorrichtungen 1 einer Melkanlage zum Melken von milchgebenden Tieren, z.B. Kühe, gezeigt. Pro Zitze eines Euters eines milchgebenden Tieres sind zwei Sicherheitsventilvorrichtungen 1 vorgesehen. Die Melkanlage wird nicht weiter erläutert. Stellvertretend für ein Melkzeug der Melkanlage ist schematisch ein Zitzenbecher 8 gezeigt, an welchen über eine Leitung 5 eine der Sicherheitsventilvorrichtungen 1 angeschlossen ist. Weiterhin ist der Zitzenbecher 8 über eine weitere Ausgangsleitung 9 einer Reinigungsvorrichtung (so genannte Pre-Dip/Post-Dip-Vorrichtungen) angeschlossen. Diese Reinigungsvorrichtung ist hier nur schematisch mit einem von mehreren Sicherheitsventilen 10 und Versorgungseinheiten (Pre-Dip-Versorgung 170 und Post-Dip-Versorgung 170') gezeigt. Hierbei ist pro Zitze bzw. Zitzenbecher 8 mindestens ein Sicherheitsventil 10 vorgesehen.

Eine ausführliche Beschreibung der Reinigungsvorrichtung und der Sicherheitsventilvorrichtungen kann den Dokumenten US 2012/0017836 A1 und WO 2010/053577 A1 entnommen werden.

Die Sicherheitsventilvorrichtungen 1 dienen dazu, ein versehentliches Ansaugen von unerwünschten Medien aus einer "Schlechtmilch"-Leitung (hier z.B. eine Leitung 5b) bzw. einer "Reinigungsleitung" (hier z.B. die Leitung 5) in eine "Gutmilch"-Leitung (hier z.B. eine Leitung 5a, 5c) zu vermeiden.

Die Sicherheitsventilvorrichtungen 1 umfassen jeweils drei Einzelventile 2, 3 und 4. Das erste Ventil 2 und das zweite Ventil 3 werden auch "Block-Ventile" genannt. Je nach Strömungsrichtung des durchströmenden Mediums werden das erste Ventil 2 als Einlassventil und das zweite Ventil 3 als Auslassventil oder umgekehrt bezeichnet. Das dritte Ventil 4 trägt üblicherweise die Bezeichnung "Bleed-Ventil". Diese drei Ventile 2, 3 und 4 sind miteinander derart verbunden, dass das erste Ventil 2 und das zweite Ventil 3 strömungsmäßig in Reihe geschaltet sind, wobei das dritte Ventil 4 mit einer Verbindung des ersten Ventils 2 und des zweiten Ventils 3 verbunden ist. Damit wird die Sicherheitsventilvorrichtung 1, welche auch "Block-Bleed-Block-Ventil" genannt wird, gebildet.

Das erste Ventil 2 der ersten Sicherheitsventilvorrichtung 1 ist über einen ersten Anschluss 2a über die Leitung 5b an einem Schlechtmilchbehälter 6 angeschlossen. Ein Auslass des ersten Ventils 2 ist mit einem Einlass des zweiten Ventils 3 über das dritte Ventil 4 verbunden. Das dritte Ventil besitzt einen Anschluss 4a, durch welchen die Verbindung des ersten Ventils 2 mit dem dritten Ventil 3 mit der Atmosphäre verbindbar ist. Das zweite Ventil 3 ist mit seinem Anschluss 3a sowohl mit der Leitung 5 zum Zitzenbecher als auch mit der Leitung 5a zu der zweiten Sicherheitsventilvorrichtung 1 verbunden. Die zweite Sicherheitsventilvorrichtung 1 ist so aufgebaut wie die erste und über die Leitung 5c an einem "Gutmilchbehälter" 7 angeschlossen.

Die Sicherheitsventilvorrichtungen 1 werden mit einem Vakuum zum Ansaugen von Milch aus dem Zitzenbecher 8 von einer nicht näher beschriebenen Vakuumeinheit beaufschlagt.

Das Sicherheitsventil 10 ist hier schematisch dargestellt und weist zwei Blockventile 11 und 12 sowie ein Bleed-Ventil 13 auf. Das erste Blockventil 11 ist mit einem Einlass über einen Eingang 110 und eine Leitung 16 mit der Pre-Dip-Versorgung 170 bzw. Post-Dip-Versorgung 170' verbunden. Weiterhin ist ein Auslass des ersten Blockventils 11 über eine Verbindung 14' mit einem Einlass des zweiten Blockventils 12 verbunden. Ein Auslass des zweiten Blockventils 12 ist über einen Ausgang 120 mit der Ausgangsleitung 9 an dem Zitzenbecher 8 angeschlossen.

Die Verbindung 14' kommuniziert außerdem mit einem Einlass des Bleed-Ventils 13, welches mit seinem Auslass mit einem Bleedausgang 130 des Sicherheitsventils 10 verbunden ist.

Auch dieses Sicherheitsventil 10 hat eine Funktion eines Block-Bleed-Block-Ventils. Wenn die Blockventile 11 und 12 geöffnet sind, ist das Bleed-Ventil 13 geschlossen. Diese Stellung wird im Weiteren Durchlassstellung genannt. In einer so genannten Blockstellung sind die Blockventile 11 und 12 geschlossen, wobei das Bleed-Ventil 13 geöffnet ist und den Bleed-Auslass 130 mit der Verbindung 14' verbindet. Damit ist in der Blockstellung sichergestellt, dass einerseits das erste Blockventil 11 einen Durchfluss von Medium aus der Pre-Dip-Versorgung 170 bzw. Post-Dip-Versorgung 170' vollständig blockiert und andererseits das zweite Blockventil 12 die Verbindung zum Zitzenbecher 8 über die Ausgangsleitung 9 sperrt.

Die Durchlassstellung wird bei Reinigungsvorgängen (Pre-Dip, Post-Dip) eingenommen, wobei die Blockstellung bei Melkvorgängen eingestellt ist. Außerdem wird die Blockstellung als Sicherheitsstellung immer bei nicht aktiviertem Antrieb des Sicherheitsventils 10 eingenommen.

In der Blockstellung ist somit außerdem gewährleistet, dass bei einer möglichen Undichtigkeit des ersten Blockventils 11 (z.B. durch Verschleiß) Medium aus der Pre-Dip-Versorgung 170 bzw. Post-Dip-Versorgung 170' nicht in die Ansaugleitung 5 der Sicherheitsventilvorrichtung 1 gelangen kann, da die Verbindung 14' durch das geöffnete Bleed-Ventil 13 mit dem Bleedausgang 130 (z.B. in die Atmosphäre oder in ein geeignetes Sammelgefäß) verbunden ist.

Bei einer Undichtigkeit des zweiten Blockventils 12 in der Blockstellung kann über die Ausgangsleitung 9 aufgrund des geöffneten Bleed-Ventils 13 kein Medium aus der Pre-Dip-Versorgung 170 bzw. Post-Dip-Versorgung 170' angesaugt werden.

Das Sicherheitsventil 10 wird unten noch ausführlich beschrieben.

Eine mögliche Anordnung von diesen Sicherheitsventilen im Zusammenhang mit Pre-Dip-/Post-Dip-Versorgungen 170, 170' ist in Figur 2 in einer schematischen Blockdarstellung gezeigt.

Vier Zitzenbecher 8 sind jeweils über eine Ausgangsleitung 9 und 9a über Rückschlagventile RV an eine erste Sicherheitsventilanordnung 10A mit vier Sicherheitsventilen 10 angeschlossen, welche mit einer Post-Dip-Versorgung 170' über Eingangsleitungen 16a, 16b verbunden sind. Außerdem ist eine zweite Sicherheitsventilanordnung 10B von vier Sicherheitsventilen 10 über weitere Ausgangsleitungen 9b an über Rückschlagventile RV an die Ausgangsleitungen 9 zu den Zitzenbechern 8 angeschlossen. Die zweite Sicherheitsventilanordnung 10B ist über Eingangsleitungen 16a, 16b, 16e hier Bestandteil der Pre-Dip-Versorgung 170. Die Rückschlagventile RV ermöglichen einen gerichteten Fluss der Medien in die Ausgangsleitungen 9, wobei sie einen Rückfluss verhindern.

Die Pre-Dip-Versorgung liefert ein Pre-Dip-Medium aus einer Pre-Dip-Mediumquelle 17 durch Eingangsleitungen 16e. Außerdem wird gefilterte Spülluft aus einer Spülluftquelle 19 in Eingangsleitungen 16b bereitgestellt.

In der Post-Dip-Versorgung erfolgt die Versorgung mit Post-Dip-Medium aus einer Post-Dip-Mediumquelle 17' über die Eingangsleitungen 16d. Durch die Eingangsleitungen 16c wird Wasser aus einer Wasserquelle 18 bereitgestellt. Auch hier ist eine Spülluftquelle 19 für gefilterte Spülluft vorhanden, welche in Eingangsleitungen 16b geliefert wird.

Das umfasst z.B. Jod, Hexidinverbindungen oder dergleichen. Beispielsweise werden 150 ml Pre-Dip-Medium bzw. Post-Dip-Medium pro Zitze benötigt.

Alle Quellen 17, 17', 18, 19 liefern die von ihnen bereitgestellten Medien unter einem bestimmten Druck. Daher sind die Sicherheitsventile 10 mit diesem Druck, jedoch nicht mit Unterdruck bzw. Vakuum, beaufschlagt. Zudem führen die Sicherheitsventile 10 keine Dosierfunktionen aus.

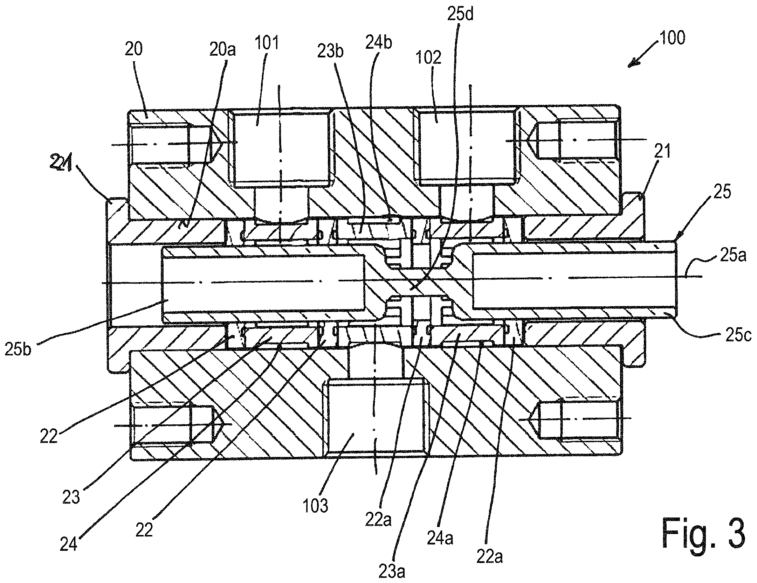

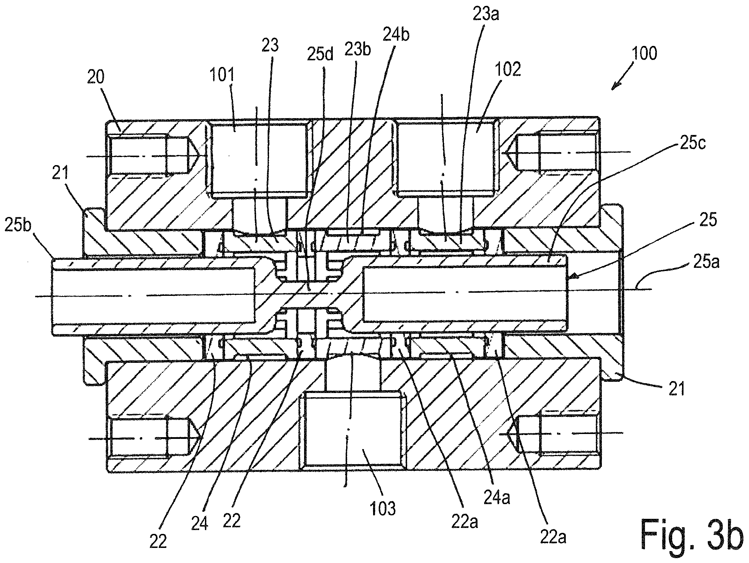

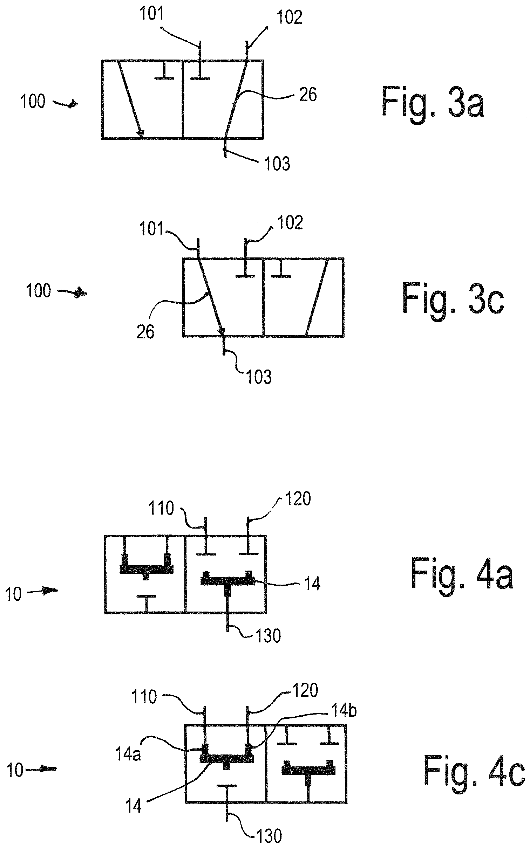

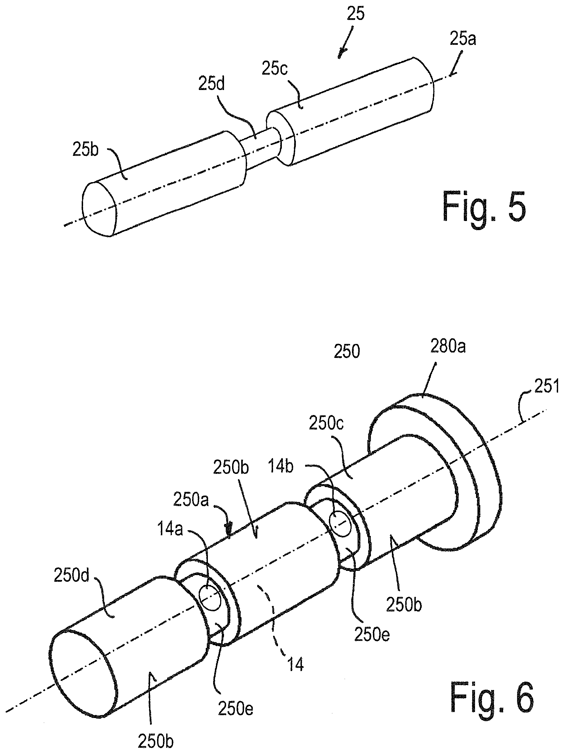

In den Figuren 3-3c sind schematische Schnittansichten und Schaltbilder eines üblichen Wegeventils 100 in unterschiedlichen Schaltstellungen gezeigt. Figur 5 stellt dazu eine schematische Perspektivansicht eines üblichen Kolbens 25 dar.

Hierbei zeigt Figur 3 das Wegeventil 100 in einer ersten Schaltstellung, wobei Figur 3a das zugehörige Schaltbild angibt. Eine weitere, zweite Schaltstellung des Wegeventils 100 ist in Figur 3b mit dem zugehörigen Schaltbild in Figur 3c dargestellt.

Das Wegeventil 100 ist ein so genanntes 3/2-Wegeventil mit einem Ventilkörper 20. Der Ventilkörper 20 weist eine durchgängige kreiszylindrische Innenbohrung 20a auf, in welche sich von oben zwei in einem Abstand angeordnete senkrechte Bohrungen erstrecken. Die linke Bohrung bildet einen Anschluss 101, die rechte einen weiteren Anschluss 102. Von unten ist eine dritte Bohrung durch den Ventilkörper 20 in die Innenbohrung 20a eingeformt und bildet einen dritten Anschluss 103.

In der Innenbohrung 20a des Ventilkörpers 20 sind (in der Zeichnung von links nach rechts) folgende Bauteile angeordnet: ein Halteflansch 21, eine Dichtung 22, ein Abstandshalter 23, eine weitere Dichtung 22, ein Abstandshalter 23b, eine Dichtung 22a, ein Abstandshalter 23a, eine Dichtung 22a und ein weiterer Halteflansch 21. Die Dichtungen 22-22a dichten gleichzeitig mit ihrem Außendurchmesser an der Wand der Innenbohrung 20a (statisch) und mit ihrem Innendurchmesser Abschnitte eines Kolbens 25 ab. Der Kolben 25 ist in Richtung seiner Längsachse 25a linear verschiebbar. Er weist zwei kreiszylinderförmige Körperabschnitte 25b, 25c ab, zwischen welchen eine ringförmige Vertiefung mit einem Verbindungsabschnitt 25d angeordnet und mit den Körperabschnitten 25b, 25c verbunden ist.

Der Abstandshalter 23 ist im Bereich des ersten Anschlusses 101, der Abstandshalter 23a im Bereich des zweiten Anschlusses 102 und der Abstandshalter 23b im Bereich des dritten Anschlusses 103 angeordnet. Die Abstandshalter 23, 23a, 23b können ein- oder mehrteilig sein. Es sind auch Varianten möglich, bei welchen anstelle jeder Dichtungen 22-22a mit Doppelabdichtung jeweils eine Dichtung für die Wand der Innenbohrung 20a und eine Dichtung für den Kolben 25 vorgesehen sind (z.B. O-Ringe).

Zwischen den Dichtungen 22 mit dem Abstandshalter 23 dazwischen ist ein Raum 24 festgelegt. Im Falle der Dichtungen 22a mit dem Abstandshalter 23a auch ein Raum 24a festgelegt. Ein dritter Raum 24b wird von den sich gegenüberstehenden Dichtungen 22, 22a mit dem dazwischen liegenden Abstandshalter 24b gebildet.

Durch eine lineare Verstellung des Kolbens 25 mittels eines nicht gezeigten aber leicht vorstellbaren Antriebs werden durch die Stellung seiner ringförmigen Vertiefung 25d in der ersten Schaltstellung nach Figur 3 der zweite Anschluss 102 mit dem dritten Anschluss 103 und in der zweiten Schaltstellung nach Figur 3d der erste Anschluss 101 mit dem dritten Anschluss 103 verbunden. Die jeweilige Verbindung über die ringförmige Vertiefung 25d ist in dem zugehörigen Schaltbild nach Figur 3a und 3c als Verbindung 26 angegeben.

In der ersten Schaltstellung nach Figur 3 kommunizieren auf diese Weise die Räume 24a und 24b über die ringförmige Vertiefung 25d des Kolbens 25. Der Raum 24 ist aufgrund des Körperabschnitts 25b des Kolbens 25 geschlossen, wodurch der Anschluss 101 verschlossen ist. In der zweiten Schaltstellung nach Figur 3b kommunizieren nun die Räume 24 und 24b über die ringförmige Vertiefung 25d des Kolbens 25. Hierbei ist der Raum 24a ist aufgrund des Körperabschnitts 25c des Kolbens 25 geschlossen, wodurch der Anschluss 102 verschlossen ist.

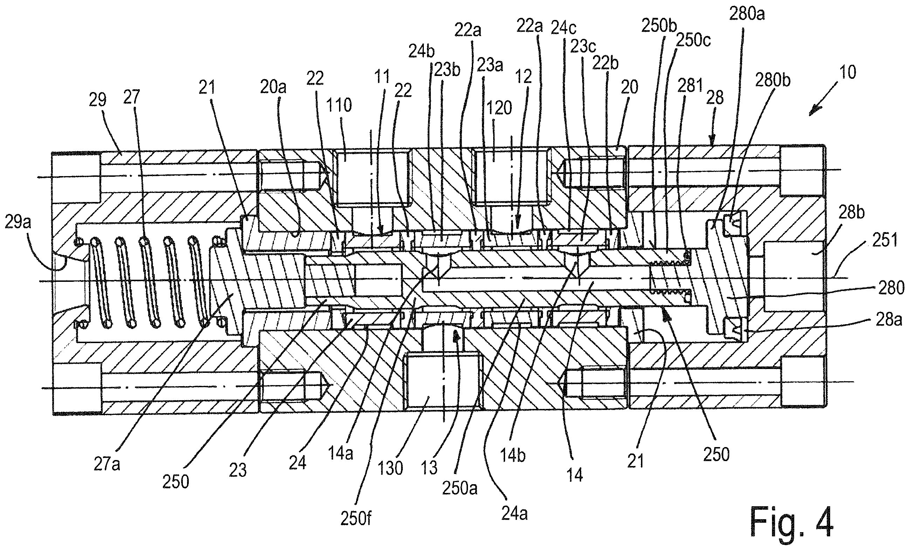

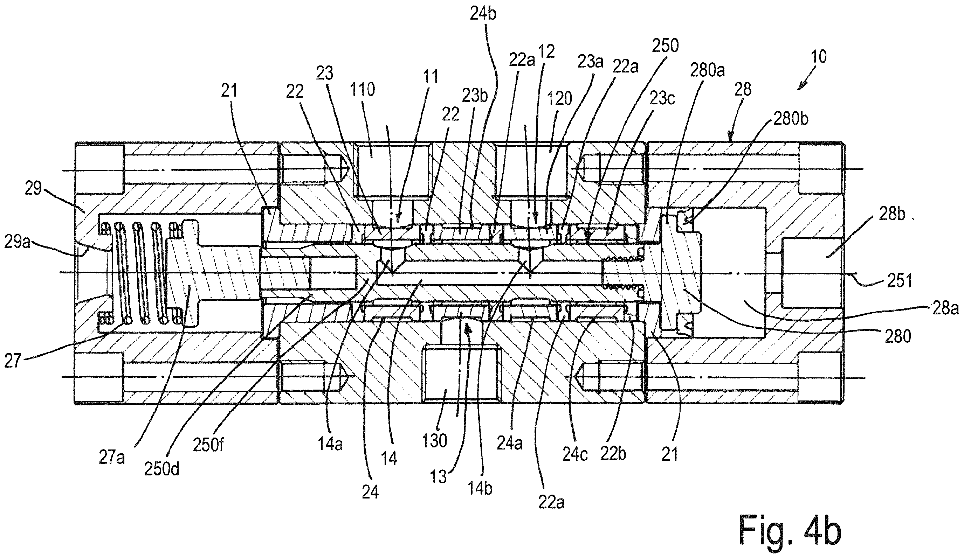

Zunächst wird ein Beispiel eines nicht erfindungsgemäßen Sicherheitsventils 10 im Zusammenhang mit den Figuren 4-4c und 5 beschrieben.

Figuren 4-4c zeigen schematische Schnittansichten und Schaltbilder des Beispiels des nicht erfindungsgemäßen Sicherheitsventils 10 in unterschiedlichen Schaltstellungen. Figur 6 ist eine schematische Perspektivansicht eines Hohlkolbens 250.

Das Sicherheitsventil 10 umfasst in diesem Beispiel den Ventilkörper 20 eines üblichen 3/2-Wegeventil 100 mit der kreiszylinderförmigen Innenbohrung 20a.

Im Gegensatz zu anderen üblichen 3/2-Wegeventilen 100 ist das Sicherheitsventil 10 mit einem Hohlkolben 250, der unten noch im Detail erläutert wird, ausgestattet, wodurch die Funktion der drei Bohrungen ebenfalls unterschiedlich ist. Die in der Zeichnung linke obere Bohrung bildet den Eingang 110 des ersten Blockventils 11, die rechte obere den Ausgang 120 des zweiten Blockventils 12 und die untere den Bleedausgang 130 des Bleed-Ventils 13.

In der Blockstellung des Sicherheitsventils 10 sind durch Verschluss des jeweils zugehörigen Blockventils 11, 12 durch den Hohlkolben 250 der Eingang 110 und der Ausgang 120 beide gleichzeitig verschlossen. Zudem kommuniziert der Bleedausgang 130 mit dem zughörigen Bleed-Ventil 13 aufgrund der Stellung des Hohlkolbens 250 mit dem Hohlraum 14 des Hohlkolbens 250. Dies wird unten noch ausführlich erläutert.

In der Durchgangsstellung des Sicherheitsventils 10 gemäß Figur 4b, 4c kommunizieren der Eingang 110 des ersten Blockventils 11 und der Ausgang 120 des zweiten Blockventils 12 über den Hohlraum 14 des Hohlkolbens 250 miteinander, sodass ein Medium unter Druck von dem Eingang 110 durch den Hohlraum 14 des Hohlkolbens 250 in den Ausgang (oder auch umgekehrt, je nach Anschluss) strömen kann. Mit anderen Worten, die Blockventile 11 und 12 sind durch die Stellung des Hohlkolbens 250 und dessen Hohlraum 14 geöffnet und verbunden. Gleichzeitig ist der Bleedausgang 130 des Bleed-Ventils 13 durch die Stellung des Hohlkolbens 250 verschlossen. Diese Stellung wird unten noch im Detail beschrieben.

In der Innenbohrung 20a des Ventilkörpers 20 sind (in der Zeichnung von links nach rechts) folgende Bauteile angeordnet: ein Halteflansch 21, eine Dichtung 22, ein Abstandshalter 23, eine weitere Dichtung 22, ein Abstandshalter 23b, eine Dichtung 22a, ein Abstandshalter 23a, eine Dichtung 22a. Zusätzlich sind vor dem weiteren Halteflansch 21 noch ein weiterer Abstandhalter 23c und eine weitere Dichtung 22b vorgesehen. Die Dichtungen 22-22a dichten gleichzeitig mit ihrem Außendurchmesser an der Wand der Innenbohrung 20a (statisch) und mit ihrem Innendurchmesser Abschnitte des Hohlkolbens 250 ab.

Zwischen den Dichtungen 22 mit dem Abstandshalter 23 dazwischen ist ein Raum 24 festgelegt, die Dichtungen 22a legen mit dem Abstandshalter 23a den Raum 24a fest. Der dritte Raum 24b wird von den sich gegenüberstehenden Dichtungen 22, 22a mit dem dazwischen liegenden Abstandshalter 24b gebildet. Weiterhin ist ein vierter Raum 24c durch die sich gegenüberstehenden Dichtungen 22a, 22b mit dem dazwischen liegenden Abstandshalter 23c gebildet. Auf diese Weise kann der Raum 24 dem ersten Blockventil 11 mit dem Eingang 110, der Raum 24a dem zweiten Blockventil 12 mit dem Ausgang 120 und der Raum 24b dem Bleed-Ventil 13 mit dem Bleed-Ausgang 130 zugeordnet werden.

Der Hohlkolben 250 ist in der Innenbohrung 20a des Ventilkörpers 20 längsverschiebbar angeordnet und weist einen Körper 250a mit einer Oberfläche 250b auf. Ein in der Zeichnung rechts angeordnetes Ende des Hohlkolbens 250 wird als Antriebsende 250c bezeichnet und ist mit einem Antriebselement 280 verbunden, das unten noch weiter beschrieben wird. Das Antriebsende 250c ist in dem rechten Halteflansch 21 längsverschiebbar geführt. Das andere, linke Ende des Hohlkolbens 250 weist einen Endabschnitt 250d mit einer zylindrischen Ausnehmung auf, die eine Aufnahme für einen Halter 27a bildet, welcher sich nach links in einen Raum des Deckels 29 erstreckt und eine Auflage für ein Kraftspeicherelement 27 bildet, das sich hier gegen eine Innenseite des Deckels 29 abstützt und unten noch erläutert wird. Der Deckel 29 ist an der linken Seite des Ventilkörpers 20 mit Befestigungselementen, z.B. Schrauben, befestigt. Ein rechter Teil des Halters 27a ist in dem linken Halteflansch 21 längsverschiebbar geführt.

Zudem ist der Hohlkolben mit einem Hohlraum 14 versehen, welcher sich von dem Antriebsende 250b bis zu einer Wand 250f in Richtung der Kolbenlängsachse 251 erstreckt. Die Wand 250f bildet eine Trennwand zwischen der Aufnahme für den Halter 27a und dem Hohlraum 14. Der Hohlraum 14 weist zwei Öffnungen 14a und 14b auf, welche sich jeweils in radialer Richtung erstrecken und jeweils in einem Zwischenabschnitt 250e münden. Diese Zwischenabschnitte 250e sind in Richtung der Kolbenlängsachse 251 beabstandet und in die Oberfläche 250b des Hohlkolbens 250 eingeformt. Dies ist in Figur 6 deutlich zu erkennen.

Die erste Öffnung 14a (in den Figuren links angeordnet) ist dem ersten Blockventil 11 zugeordnet, und die andere Öffnung 14b ist dem zweiten Blockventil 12 zugeordnet. Der Hohlraum 14 ist von der Seite des Antriebsendes 250c her mit einem Abschnitt des Antriebselementes 280 dicht verschlossen, wozu eine Dichtung 281, z.B. ein O-Ring, zwischen diesem Abschnitt und der Innenwand des Hohlraums 14 vorgesehen ist. Das Antriebselement 280 ist eine Art kreiszylindrischer Körper, welcher an seinem dem Hohlkolben 250 abgewandten Ende einen Antriebskolben 280a mit einer Antriebskolbendichtung 280b aufweist. Der Antriebskolben 208a ist in einem kreiszylindrischen Hubraum 28a einer Antriebseinheit 28 in Richtung der Kolbenlängsachse 251 des Hohlkolbens 250 längsverschiebbar geführt. Die Antriebseinheit 28 ist auf der rechten Endfläche des Ventilkörpers 20 des Sicherheitsventils 10 befestigt und umgreift einen Außenflansch des Halteflansches 21. Der Hubraum 28a ist über einen Antriebsanschluss 28b rechts vor dem Antriebskolben 280a mit einem Antriebsmedium, z.B. Druckluft, beaufschlagbar.

An der anderen, linken Endfläche des Ventilkörpers 20 ist ein den Außenflansch des Halteflansches 21 übergreifender Deckel 29 befestigt. Der Deckel 29 weist eine Öffnung 29a zur Lüftung bei einer Bewegung des Hohlkolbens 250 auf und bildet ein Gegenlager für das Kraftspeicherelement 27, das hier eine Druckfeder ist zwischen der Innenseite des Deckels 29 und der Aufnahme in dem Endabschnitt 250d des Hohlkolbens 250 unter Vorspannung eingesetzt ist. Aufgrund der Vorspannung des Kraftspeicherelementes 27, die in Richtung der Kolbenlängsachse 251 in Richtung auf die Antriebseinheit 28 wirkt, wird der Hohlkolben 250 in die in Figur 4 gezeigte Blockstellung des Sicherheitsventils 10 gedrückt. Dabei kann das rechte Ende des Antriebselementes 280 mit der Stirninnenseite des Hubraums 28a der Antriebseinheit 28 einen Anschlag des Hohlkolbens 250 in der Blockstellung bilden.

Eine Aktivierung der Antriebseinheit 28 durch Beaufschlagung des Hubraums 28a rechts von dem Antriebskolben 280a bewirkt eine Verstellung des Hohlkolbens 250 nach links gegen die Vorspannkraft des Kraftspeicherelementes 27 in die Durchlassstellung des Sicherheitsventils 10, welche in den Figuren 4b,c dargestellt ist. Das linke Ende des Endabschnitts 250d des Hohlkolbens 250 wirkt zusammen mit der Innenseite des Deckels 29 als ein Anschlag der Bewegung des Hohlkolbens 250 in der Durchlassstellung.

In der in Figur 4 gezeigten Blockstellung befindet sich der Endabschnitt 250d des Hohlkolbens 250 mit seiner durchgehenden Oberfläche 250b im Bereich des Eingangs 110 und dichtet den Raum 24 ab. Das heißt, die Dichtungen 22 dichten die Innenbohrung 20a und den Bereich des Endabschnitts 250d. Somit ist der Raum 24 verschlossen, was gleichbedeutend damit ist, dass das erste Blockventil 11 und somit der Eingang 110 verschlossen sind. Der gleiche Zustand ist bei dem zweiten Blockventil 12 vorhanden. Hier dichtet die Oberfläche 250b des Körpers 250a des Hohlkolbens 250 mit den zugehörigen Dichtungen 22a den Raum 24a. Somit sind das zweite Blockventil 12 und der Eingang 120 verschlossen.

Die erste Öffnung 14a des Hohlraums 14 des Hohlkolbens 250 kommuniziert in der in Figur 4 gezeigten Blockstellung mit dem Raum 24b, welcher durch die Dichtungen 22 und 22a abgedichtet ist. Die zweite Öffnung 14b ist mit dem Raum 24c zwischen den Dichtungen 22a und 22b verbunden. Gleichzeitig kommuniziert der Raum 24b als Teil des Bleed-Ventils 13 mit dem Bleedausgang 130. Mit anderen Worten, der Bleedausgang 130 steht über den Raum 24b und die Öffnung 14b mit dem Hohlraum 14 und dem Raum 24c in Verbindung. Somit ist das Bleed-Ventil 13 in der Blockstellung des Sicherheitsventils 10 geöffnet. Im Falle einer Undichtigkeit des ersten Blockventils 11 wird das dadurch entweichende Medium auf der rechten Seite über den Raum 24b in das Bleed-Ventil 13 abgeleitet und kann nicht in den verschlossenen Ausgang 12 gelangen. Auf der linken Seite des ersten Blockventils 11 würde das Medium aus dem Eingang 110 in den Bereich des Kraftspeicherelementes 27 gelangen und durch die Öffnung 29a austreten können. Beide Seiten des Blockventils 12, d.h. der Raum 24b und 24c, sind mit dem geöffneten Bleed-Ventil 13 und dem Bleedausgang 130 wie oben beschrieben verbunden.

Das Schaltbild in Figur 4a zeigt den Hohlraum 14 sinnbildlich in der Blockstellung mit dem Bleedausgang 130 verbunden. Eingang 110 und Ausgang 120 sind verschlossen.

In der in Figur 4b gezeigten Durchlassstellung befindet sich der mittlere Abschnitt des Körpers 250a des Hohlkolbens 250 mit seiner durchgehenden Oberfläche 250b im Bereich des Bleedausgangs 130 und dichtet mit den Dichtungen 22 und 22a den Raum 24b ab. Das heißt, der Raum 24b verschlossen, was gleichbedeutend damit ist, dass das Bleed-Ventil 13 und der Bleedausgang 130 in der Durchlassstellung des Sicherheitsventils 10 verschlossen sind.

Die erste Öffnung 14a des Hohlraums 14 des Hohlkolbens 250 kommuniziert in der in Figur 4b gezeigten Durchlassstellung mit dem Raum 24, welcher durch die Dichtungen 22 abgedichtet ist. Die zweite Öffnung 14b ist mit dem Raum 24a zwischen den Dichtungen 22a verbunden. Mit anderen Worten, der Eingang 110 ist über den Raum 24 durch die erste Öffnung 14a mit dem Hohlraum 14 des Hohlkolbens 250 verbunden. Gleichzeitig kommuniziert die zweite Öffnung 14b mit dem Hohlraum 14 des Hohlkolbens 250 und dem Raum 24a mit dem Ausgang 120. Auf diese Weise sind die Blockventile 11 und 12 geöffnet, und Eingang 110 und Ausgang 120 verbunden.

Die Durchlassstellung wird in Figur 4c durch ein Schaltbild illustriert, wobei der Hohlraum 14 über die erste Öffnung 14a mit dem Eingang 110 und über die zweite Öffnung 14b mit dem Ausgang 120 verbunden sind. Der Bleedausgang 130 ist verschlossen.

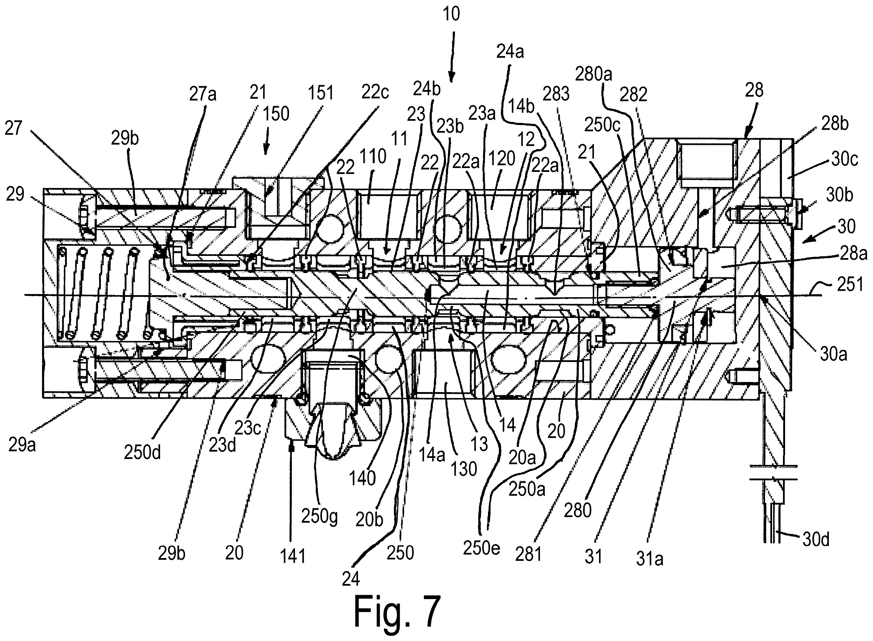

Figur 7 zeigt eine schematische Schnittansicht eines Ausführungsführungsbeispiels eines erfindungsgemäßen Sicherheitsventils 10.

Im Unterschied zu dem in Figur 4-4c gezeigten Sicherheitsventil 10 kommt hier das Gehäuse eines üblichen 5/2-Wegeventils zur Anwendung, wobei ebenfalls ein Hohlkolben 250 mit dem Hohlraum 14 vorgesehen ist. Der Hohlkolben 250 ist auf der linken Seite in seiner Kolbenlängsrichtung 251 verlängert und weist eine Einschnürung 250g auf.

Der Körper 250a des Hohlkolbens 250 ist in dem rechten Halteflansch 21 längsverschiebbar in Richtung der Kolbenlängsachse 251 geführt und mit einer Dichtung 281 gegenüber dem Halteflansch 21 abgedichtet.

In der Aufnahme des Endabschnitts 250d ist ein Halter 27a angeordnet, welcher sich nach links in einen Raum des Deckels 29 erstreckt und eine Auflage für das Kraftspeicherelement 27 bildet, das sich auch hier gegen eine Innenseite des Deckels 29 abstützt. Der Deckel 29 ist an der linken Seite des Ventilkörpers 20 mit Befestigungselementen 29b, z.B. Schrauben, befestigt.

In der Innenbohrung 20a des Ventilkörpers 20 sind (in der Zeichnung von links nach rechts) folgende Bauteile angeordnet: ein Halteflansch 21, eine Dichtung 22c, ein Abstandhalter 23d, eine Dichtung 22c, ein Abstandhalter 23c, eine Dichtung 22, ein Abstandshalter 23, eine weitere Dichtung 22, ein Abstandshalter 23b, eine Dichtung 22a, ein Abstandshalter 23a, eine Dichtung 22a. Dichtungen 22-22b und zugehörigen Räume 24-24b der Ventile 11, 12 und 13 sind wie oben im Beispiel gemäß Figuren 4-4c beschrieben.

Ein erster Zusatzanschluss 140 ist unten links neben dem Auslass 130 angeordnet, und ein zweiter Zusatzanschluss 150 ist oben links neben dem Eingang 110 vorgesehen. Dieser zweite Zusatzanschluss 150 ist mit einem Verschlusselement 151 vollständig verschlossen. Der erste Zusatzanschluss 140 ist mit einem Verschlusselement 141, welches eine kleine Öffnung aufweist, versehen.

Die in Figur 7 gezeigte Blockstellung ist hinsichtlich der Ventile 11, 12, 13 bereits im Beispiel der Figuren 4-4c erläutert und wird hier nicht wiederholt.

Der erste Zusatzanschluss 140 ist in der Blockstellung über die Einschnürung 250g des Hohlkolbens 250 mit dem Eingang 110 verbunden, wodurch eine Belüftung des Eingangs 110 erzielt werden kann. Damit wird ein Volumenstrom ermöglicht, um einen unerwünschten Milchfluss in den Dipschlauch bzw. die Ausgangsleitung 9 des Dipmediums zu verhindern. Ein weiterer Vorteil besteht darin, dass ein so genanntes Kopfraumvolumen am Zitzenkopf reduziert werden kann. In der nicht gezeigten, aber vorstellbaren Durchlassstellung ist der erste Zusatzanschluss 140 über die Einschnürung 250g des Hohlkolbens 250 mit dem verschlossenen zweiten Zusatzanschluss 150 verbunden.

In diesem Ausführungsbeispiel ist gezeigt, dass das Antriebselement 280 den Antriebskolben 281 mit einer Dichtung 282 aufweist, welche den Antriebskolben 281 gegenüber dem Hubraum 28a abdichtet. Das Antriebselement 280 ist mit der Dichtung 281 in das Antriebsende 250c des Hohlkolbens 250 dicht eingebracht und dichtet den Hohlraum 14 ab. Der Antriebsanschluss 28b ist hier radial angeordnet.

Zudem weist das Sicherheitsventil 10 eine Sensoreinheit 30 auf, welche ein Sensorelement 30a mit einer Sensorleitung 30d, eine Sensorbefestigung 30b, z.B. eine Schraube, und einen Sensorhalter 30c umfasst. Der Sensorhalter 30c ist an dem rechten Seitenende der Antriebseinheit 28 so befestigt, dass das Sensorelement 30a im Bereich des rechten Endes des Antriebselementes 280 angeordnet ist. Das Sensorelement 30a wirkt hier beispielsweise mit einem Magnetelement 31, das auf dem rechten Ende des Antriebselementes 280 mit einem Sicherungselement 31a festgelegt ist, zusammen. Das Sensorelement 30a kann z.B. ein Hall-Element sein. Natürlich können auch andere Sensorausführung, z.B. Ultraschall, Infrarot, etc. zur Anwendung kommen.

Mit der Sensoreinheit 30 ist es möglich, dass die lineare Stellung des Hohlkolbens 250 in seiner Kolbenlängsachse 251 erfassbar ist. Somit ist die in Figur 7 gezeigte Blockstellung hier berührungslos abtastbar, eine Fehlererkennung ist damit möglich.

Der Ventilkörper 20 weist mehrere Befestigungsöffnungen 20b auf, welche sich senkrecht zur Zeichnungsebene durch den Ventilkörper 20 hindurch erstrecken.

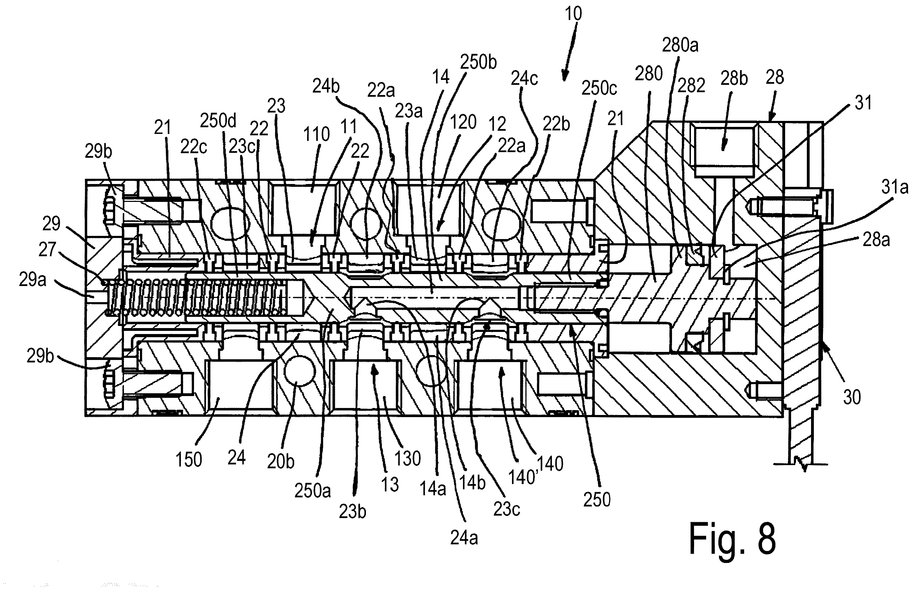

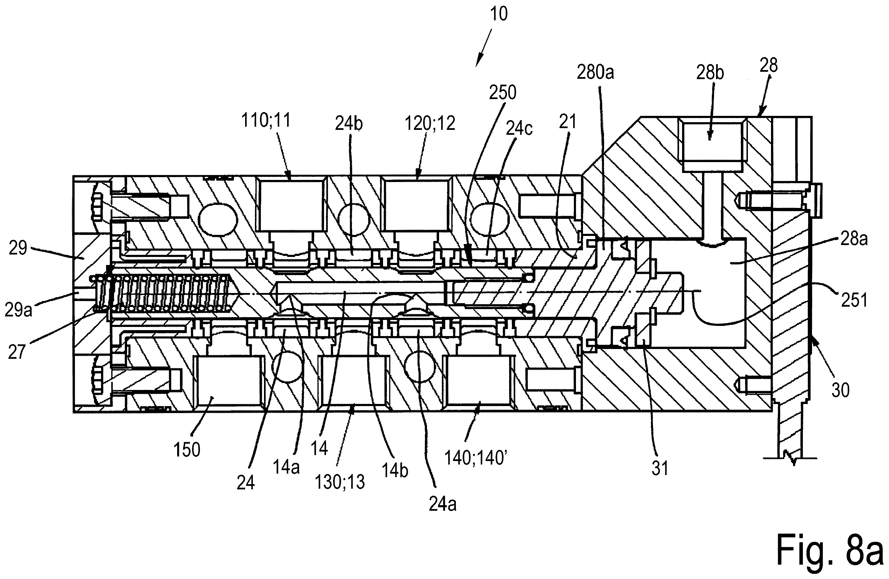

Figuren 8 und 8a zeigen schematische Schnittansichten einer Variante des Ausführungsführungsbeispiels nach Figur 7 in unterschiedlichen Schaltstellungen. So zeigt Figur 8 die Blockstellung des Sicherheitsventils 10, und Figur 8a stellt die Durchlassstellung dar.

Der Aufbau dieser Variante ist ähnlich der des Ausführungsbeispiels nach Figur 7. Es sollen nur die Unterschiede dazu erläutert werden.

In diesem Fall sind Eingang 110 und Ausgang 120 an der Oberseite des Ventilkörpers 20 angeordnet, wobei der Bleedausgang 130 zwischen diesen an der Unterseite angeordnet ist. Rechts von dem Bleedausgang 130 zur Antriebsseite hin ist der erste Zusatzanschluss 140 mit einem Ventil 140' vorgesehen. Links von dem Bleedausgang 130 befindet sich der zweite Zusatzanschluss 150.

In dieser Variante sind in der Innenbohrung 20a des Ventilkörpers 20 (in der Zeichnung von links nach rechts) folgende Bauteile angeordnet: ein Halteflansch 21, eine Dichtung 22c, ein Abstandhalter 23c, eine Dichtung 22, ein Abstandshalter 23, eine weitere Dichtung 22, ein Abstandshalter 23b, eine Dichtung 22a, ein Abstandshalter 23a, eine Dichtung 22a, ein Abstandhalter 23b und eine Dichtung 22b. Dichtungen 22-22b und zugehörigen Räume 24-24b der Ventile 11, 12 und 13 sind wie oben beim Beispiel der Figuren 4-4c beschrieben.

Der Hohlraum 14 des Hohlkolbens 250 ist in der in Figur 8 gezeigten Blockstellung über die erste Öffnung 14a des Hohlraums 14 des Hohlkolbens 250 mit dem Ventil 13 und dem Bleedausgang 130 verbunden. Zusätzlich ist die zweite Öffnung 14b des Hohlraums 14 des Hohlkolbens 250 mit dem Ventil 140' und dem ersten Zusatzanschluss 140 verbunden. Auf diese Weise ist es möglich, dass der Hohlraum 14 mit einem Reinigungsmedium (auch Luft) durchspült werden kann.

In der in Figur 8a gezeigten Durchlassstellung sind die Zusatzanschlüsse 140 und 150 verschlossen, wie leicht zu erkennen ist. Dabei kann der zweite Zusatzanschluss 150 im Falle einer Undichtigkeit des Eingangs 110 das Kraftspeicherelement 27 vor Eindringen von Medium schützen, wodurch eine Korrosion des Kraftspeicherelementes 27 verhindert werden kann.

Das Sicherheitsventil 10 kann aus Kunststoff angefertigt werden, wobei die Dichtungen gegenüber den verwendeten Medien beständig sein müssen. Hierzu kann z.B. ein Fluorelastomerwerkstoff (z.B. Viton) zum Einsatz kommen. Der Hohlkolben 250 wird aus einem Edelstahl hergestellt.

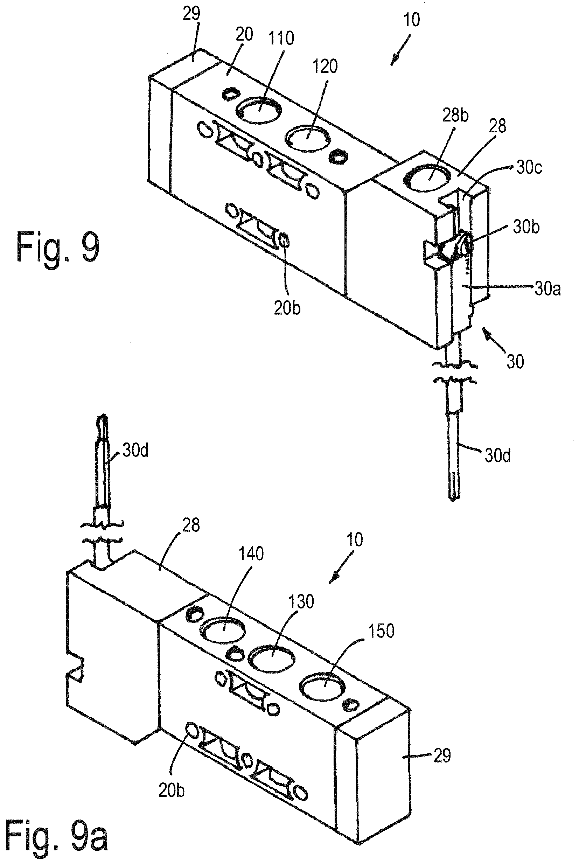

Figuren 9 und 9a illustrieren schematische Perspektivansichten der Variante des Ausführungsführungsbeispiels nach Figuren 8-8a.

In Figur 9 ist eine Oberseite des Sicherheitsventils 10 gezeigt, wobei Figur 9a die Unterseite zeigt. Das Sicherheitsventil 10 ist äußerst schmal und nimmt nur einen geringen Bauraum ein. Mittels der Befestigungsöffnungen 20b lassen sich mehrere Sicherheitsventile 10 leicht zu einer Sicherheitsventilanordnung 10A, 10B zusammenfassen. Weiterhin ist die Sensoreinheit 30 zu erkennen. Hierbei können handelsübliche Sensorelemente 30a in einfacher Weise in die Sensorhalterung 30c eingesetzt, in ihr justiert und mittels der Sensorbefestigung 30b festgelegt werden.

Der Hohlkolben 250 wird aus einem Werkstoff hergestellt, welcher gegenüber den mit dem Hohlkolben 250 in Verbindung kommenden Medien resistent ist. Dieser Werkstoff kann z.B. ein Edelstahl oder/und ein Kunststoff sein. Natürlich sind auch Kombinationen von verschiedenen Werkstoffen möglich.

Die oben beschriebenen Ausführungsbeispiele schränken die Erfindung nicht ein. Die Erfindung ist im Rahmen der beigefügten Ansprüche modifizierbar.

Es ist denkbar, dass die Abstandhalter 23-23d mit den zugehörigen Dichtungen 22-22c als Zweikomponenten-Spritzgussbauteile hergestellt werden.

Das Verschlusselement 141 des Zusatzanschlusses 140 kann eine Düse sein oder mit einer Düse ausgerüstet sein, wobei der Austrittsquerschnitt der Düse wesentlich geringer ist als der Querschnitt des Zusatzanschlusses 140.

### Bezugszeichen

- 1: Ventilvorrichtung
- 2: Erstes Ventil
- 2a: Erster Anschluss
- 3: Zweites Ventil
- 3a: Zweiter Anschluss
- 4: Drittes Ventil
- 4a: Dritter Anschluss
- 5-5c: Leitung
- 6: Schlechtmilchbehälter
- 7: Gutmilchbehälter
- 8: Zitzenbecher
- 9, 9a, 9b: Ausgangsleitung
- 10: Sicherheitsventil
- 10A, 10B: Sicherheitsventilanordnung
- 11: Erstes Blockventil
- 12: Zweites Blockventil
- 13: Bleed-Ventil
- 14': Verbindung
- 14: Hohlraum
- 14a, 14b: Öffnung
- 15: Anschluss
- 16, 16a-e: Eingangsleitung
- 17: Pre-Dip-Mediumquelle
- 17': Post-Dip-Mediumquelle
- 18: Wasserquelle
- 19: Spülluftquelle
- 20: Ventilkörper
- 20a: Innenbohrung
- 20b: Befestigungsöffnung
- 21: Halteflansch
- 22, 22a-c: Dichtung
- 23, 23a-c: Abstandshalter
- 24, 24a-c: Raumabschnitt
- 25: Kolben
- 25a: Kolbenlängsachse
- 25b, 25c: Körperabschnitt
- 25d: Verbindungsabschnitt
- 26: Verbindung
- 27: Kraftspeicherelement
- 27a: Halter
- 28: Antriebseinheit
- 28a: Antriebsraum
- 28b: Antriebsanschluss
- 29: Deckel
- 29a: Öffnung
- 29b: Befestigungselement
- 30: Sensoreinheit
- 30a: Sensorelement
- 30b: Sensorbefestigung
- 30c: Sensorhalter
- 30d: Sensorleitung
- 31: Magnetelement
- 31a: Sicherungselement
- 100: Wegeventil
- 101, 102, 103: Anschluss
- 110, 110': Eingang
- 120: Ausgang
- 130: Bleedausgang
- 140, 150: Zusatzanschluss
- 140': Ventil
- 141, 151: Verschlusselement
- 170: Pre-Dip-Versorgung
- 170': Post-Dip-Versorgung
- 250: Hohlkolben
- 250a: Körper
- 250b: Oberfläche
- 250c: Antriebsende
- 250d: Endabschnitt
- 250e: Zwischenabschnitt
- 250f: Wand
- 250g: Einschnürung
- 251: Kolbenlängsachse
- 280: Antriebselement
- 280a: Antriebskolben
- 280b: Antriebskolbendichtung
- 281, 282: Dichtung
- RV: Rückschlagventil

## Patentansprüche

1. Sicherheitsventil (10) für eine Reinigungsvorrichtung für eine Melkanlage zum Melken von milchgebenden Tieren, aufweisend ein erstes Blockventil (11) mit einem Eingang (110), ein zweites Blockventil (12) mit einem Ausgang (120), ein Bleed-Ventil (13) mit einem Bleedausgang (130), einen Kolben (25) und eine Antriebseinheit (28), wobei das Sicherheitsventil (10) von einer Blockstellung, in welcher das erste Blockventil (11) und das zweite Blockventil (12) zur Blockierung des Eingangs (110) und des Ausgangs (120) geschlossen sind und das Bleed-Ventil (13) zur Verbindung des Bleedausgangs (130) mit einer Verbindung (14') geöffnet ist, in eine Durchlassstellung, in welcher das erste Blockventil (11) und das zweite Blockventil (12) zur Verbindung des Eingangs (110) über die Verbindung (14') mit dem Ausgang (120) geöffnet sind und das Bleed-Ventil (13) zur Blockierung des Bleedausgangs (130) geschlossen ist, und zurück verstellbar ausgebildet ist, wobei das Sicherheitsventil (10) als ein Wegeventil ausgebildet ist, wobei der Kolben (25) ein Hohlkolben (250) ist und einen Hohlraum (14) als Verbindung (14') aufweist,
**dadurch gekennzeichnet, dass**
das Sicherheitsventil (10) einen Ventilkörper (20) eines 5/2-Wegeventils mit dem Hohlkolben (250) aufweist, wobei in einer Innenbohrung (20a) des Ventilkörpers (20) alternierend sechs Dichtungen (22, 22a, 22c) und fünf Abstandshalter (23, 23a, 23b, 23c, 23d) zwischen zwei Halteflanschen (21) eingesetzt sind, wobei jeder der Abstandshalter (23, 23a, 23b, 23c, 23d) zwischen zwei der Dichtungen (22, 22a, 22c) angeordnet ist und wobei die Dichtungen (22, 22a, 22c) gleichzeitig mit ihrem Außendurchmesser an der Wand der Innenbohrung (20a) und mit ihrem Innendurchmesser Abschnitte des Hohlkolbens (250) abdichten, und dass
der Eingang (110) in der Blockstellung mit einem Zusatzanschluss (140) verbunden ist, wobei der Zusatzanschluss (140) mit einer Düse verengt ist, wobei ein Austrittsquerschnitt der Düse wesentlich geringer ist als ein Querschnitt des Zusatzanschlusses (140).

2. Sicherheitsventil (10) für eine Reinigungsvorrichtung für eine Melkanlage zum Melken von milchgebenden Tieren, aufweisend ein erstes Blockventil (11) mit einem Eingang (110), ein zweites Blockventil (12) mit einem Ausgang (120), ein Bleed-Ventil (13) mit einem Bleedausgang (130), einen Kolben (25) und eine Antriebseinheit (28), wobei das Sicherheitsventil (10) von einer Blockstellung, in welcher das erste Blockventil (11) und das zweite Blockventil (12) zur Blockierung des Eingangs (110) und des Ausgangs (120) geschlossen sind und das Bleed-Ventil (13) zur Verbindung des Bleedausgangs (130) mit einer Verbindung (14') geöffnet ist, in eine Durchlassstellung, in welcher das erste Blockventil (11) und das zweite Blockventil (12) zur Verbindung des Eingangs (110) über die Verbindung (14') mit dem Ausgang (120) geöffnet sind und das Bleed-Ventil (13) zur Blockierung des Bleedausgangs (130) geschlossen ist, und zurück verstellbar ausgebildet ist, wobei das Sicherheitsventil (10) als ein Wegeventil ausgebildet ist, wobei der Kolben (25) ein Hohlkolben (250) ist und einen Hohlraum (14) als Verbindung (14') aufweist,
**dadurch gekennzeichnet, dass**
das Sicherheitsventil (10) einen Ventilkörper (20) eines 5/2-Wegeventils mit dem Hohlkolben (250) aufweist, wobei in einer Innenbohrung (20a) des Ventilkörpers (20) alternierend sechs Dichtungen (22, 22a, 22b, 22c) und fünf Abstandshalter (23, 23a, 23b, 23c) zwischen zwei Halteflanschen (21) eingesetzt sind, wobei jeder der Abstandshalter (23, 23a, 23b, 23c, 23d) zwischen zwei der Dichtungen (22, 22a, 22c) angeordnet ist und wobei die Dichtungen (22, 22a, 22b, 22c) gleichzeitig mit ihrem Außendurchmesser an der Wand der Innenbohrung (20a) und mit ihrem Innendurchmesser Abschnitte des Hohlkolbens (250) abdichten, und dass
der Hohlraum (14) des Hohlkolbens (250) in der Blockstellung über eine erste Öffnung (14a) mit dem Bleedausgang (130) und über eine zweite Öffnung (14b) mit einem Zusatzanschluss (140) verbunden ist.

3. Sicherheitsventil (10) nach Anspruch 1 oder 2, **dadurch gekennzeichnet, dass** sich der Hohlraum (250) in Richtung einer Kolbenlängsachse (251) des Hohlkolbens (250) erstreckt.

4. Sicherheitsventil (10) nach Anspruch 3, **dadurch gekennzeichnet, dass** der Hohlraum (14) eine erste Öffnung (14a) und eine zweite Öffnung (14b) umfasst.

5. Sicherheitsventil (10) nach Anspruch 3, **dadurch gekennzeichnet, dass** in der Blockstellung das erste Blockventil (11) und das zweite Blockventil (12) zur Blockierung des Eingangs (110) und des Ausgangs (120) durch den Hohlkolben (250) geschlossen sind und das Bleed-Ventil (13) den Bleedausgang (130) mit dem Hohlraum (14) des Hohlkolbens (250) verbindet.

6. Sicherheitsventil (10) nach Anspruch 4 oder 5, **dadurch gekennzeichnet, dass** in der Durchlassstellung das erste Blockventil (11) über die erste Öffnung (14a) mit dem Hohlraum (14) des Hohlkolbens (250) und das zweite Blockventil (12) über die zweite Öffnung (14b) mit dem Hohlraum (14) des Hohlkolbens (250) zur Verbindung des Eingangs (110) mit dem Ausgang (120) kommunizieren, und dass das Bleed-Ventil (13) zur Blockierung des Bleedausgangs (130) durch den Hohlkolben (250) geschlossen ist.

7. Sicherheitsventil (10) nach Anspruch 6, **dadurch gekennzeichnet, dass** der Hohlkolben (250) mit einem Antriebselement (280) zur Verstellung des Hohlkolbens (250) aus der Blockstellung in die Durchlassstellung des Sicherheitsventils (10) und zurück verbunden ist.

8. Sicherheitsventil (10) nach Anspruch 7, **dadurch gekennzeichnet, dass** das Sicherheitsventil (10) ein vorgespanntes Kraftspeicherelement (27) aufweist, welches den Hohlkolben (250) in die Blockstellung vorspannt und in der Blockstellung hält.

9. Sicherheitsventil (10) nach einem der vorhergehenden Ansprüche, **dadurch gekennzeichnet, dass** das Sicherheitsventil (10) eine Sensoreinheit (30) zur Erfassung der Blockstellung oder/und der Durchlassstellung aufweist.

10. Sicherheitsventil (10) nach Anspruch 9, **dadurch gekennzeichnet, dass** die Sensoreinheit (30) mit dem Hohlkolben (250) direkt oder/und indirekt über ein Antriebselement (280) zusammenwirkt.

11. Sicherheitsventil (10) nach Anspruch 10, **dadurch gekennzeichnet, dass** die Sensoreinheit (30) einem Magnetelement (31), das an dem Hohlkolben (250) oder/und dem Antriebselement (280) angebracht ist, zusammenwirkt.

## Claims

1. A safety valve (10) for a cleaning device for a milking installation for milking milk-providing animals, the safety valve (10) having a first block valve (11) having an intake (110), a second block valve (12) having an exhaust (120), a bleed valve (13) having a bleed outlet (130), a piston (25), and a drive unit (28), wherein the safety valve (10) is configured so as to be adjustable to and fro between a blocking position in which the first block valve (11) and the second block valve (12), in order to block the intake (110) and the exhaust (120), are closed and the bleed valve (13), in order to connect the bleed outlet (130) to a connection (14') is opened, and a throughput position in which the first block valve (11) and the second block valve (12), in order to connect the intake (110) by way of the connection (14') to the exhaust (120), are opened and the bleed valve (13), in order to block the bleed outlet (130), is closed, wherein the safety valve (10) is configured as a directional valve, the piston (25) being a hollow piston (250) having a cavity (14) as a connection (14'),
**characterized in that**
the safety valve (10) has a valve body (20) of a 5/2-way valve having the hollow piston (250), wherein in an internal bore (20a) of the valve body (20) six seals (22, 22a, 22c) and five spacers (23, 23a, 23b, 23c, 23d) are inserted in an alternating fashion, wherein each spacer (23, 23a, 23b, 23c, 23d) is arranged between two seals (22, 22a, 22c), and wherein the seals (22, 22a, 22c) by way of the external diameter thereof simultaneously seal the wall of the internal bore (20a) and by way of the internal diameter thereof seal portions of the hollow piston (250), and **in that**
the intake (110) in the blocking position is connected to an additional connector (140), wherein the additional connector (140) is constricted by a nozzle, an exit cross section of the nozzle being substantially smaller than a cross section of the additional connector (140).

2. A safety valve (10) for a cleaning device for a milking installation for milking milk-providing animals, the safety valve (10) having a first block valve (11) having an intake (110), a second block valve (12) having an exhaust (120), a bleed valve (13) having a bleed outlet (130), a piston (25), and a drive unit (28), wherein the safety valve (10) is configured so as to be adjustable to and fro between a blocking position in which the first block valve (11) and the second block valve (12), in order to block the intake (110) and the exhaust (120), are closed and the bleed valve (13), in order to connect the bleed outlet (130) to a connection (14') is opened, and a throughput position in which the first block valve (11) and the second block valve (12), in order to connect the intake (110) by way of the connection (14') to the exhaust (120), are opened and the bleed valve (13), in order to block the bleed outlet (130), is closed, wherein the safety valve (10) is configured as a directional valve, the piston (25) being a hollow piston (250) having a cavity (14) as a connection (14'),
**characterized in that**
the safety valve (10) has a valve body (20) of a 5/2-way valve having the hollow piston (250), wherein in an internal bore (20a) of the valve body (20) six seals (22, 22a, 22b, 22c) and five spacers (23, 23a, 23b, 23c) are inserted in an alternating fashion, wherein each spacer (23, 23a, 23b, 23c, 23d) is arranged between two seals (22, 22a, 22c), and wherein the seals (22, 22a, 22b, 22c) by way of the external diameter thereof simultaneously seal the wall of the internal bore (20a) and by way of the internal diameter thereof seal portions of the hollow piston (250), and **in that** the cavity (14) of the hollow piston (250) in the blocking position by way of a first opening (14a) is connected to the bleed outlet (130), and by way of a second opening (14b) is connected to an additional connector (140).

3. The safety valve (10) as claimed in claim 1 or 2, **characterized in that** the cavity (250) extends in the direction of a longitudinal piston axis (251) of the hollow piston (250).

4. The safety valve (10) as claimed in claim 3, **characterized in that** the cavity (14) comprises a first opening (14a) and a second opening (14b).

5. The safety valve (10) as claimed in claim 3, **characterized in that** in the blocking position the first block valve (11) and the second block valve (12), in order to block the intake (110) and the exhaust (120), are closed by the hollow piston (250), the bleed valve (13) connecting the bleed outlet (130) to the cavity (14) of the hollow piston (250).

6. The safety valve (10) as claimed in claim 4 or 5, **characterized in that** in the throughput position the first block valve (11) by way of the first opening (14a) communicates with the cavity (14) of the hollow piston (250), and the second block valve (12) by way of the second opening (14b) communicates with the cavity (14) of the hollow piston (250), in order to connect the intake (110) to the exhaust (120), and **in that** the bleed valve (13), in order to block the bleed outlet (130), is closed by the hollow piston (250).

7. The safety valve (10) as claimed in claim 6, **characterized in that** the hollow piston (250), in order to be adjusted from the blocking position to the throughput position of the safety valve (10) and vice-versa, is connected to a drive element (280).

8. The safety valve (10) as claimed in claim 7, **characterized in that** the safety valve (10) has a pretensioned force accumulator element (27) that pretensions the hollow piston (250) to the blocking position and retains the latter in the blocking position.

9. The safety valve (10) as claimed in one of the preceding claims, **characterized in that** the safety valve (10) has a sensor unit (30) for detecting the blocking position and/or the throughput position.

10. The safety valve (10) as claimed in claim 9, **characterized in that** the sensor unit (30) interacts with the hollow piston (250) directly and/or indirectly by way of a drive element (280).

11. The safety valve (10) as claimed in claim 10, **characterized in that** the sensor unit (30) interacts with a magnetic element (31) that is attached to the hollow piston (250) and/or the drive element (280).

## Revendications

1. Soupape de sécurité (10) pour un dispositif de nettoyage d'une installation de traite pour la traite d'animaux donnant du lait, présentant une première vanne de blocage (11) avec une entrée (110), une deuxième vanne de blocage (12) avec une sortie (120), une vanne de purge (13) avec une sortie de purge (130), un piston (25) et une unité d'entraînement (28), dans laquelle la soupape de sécurité (10) est conçue réglable d'une position de blocage, dans laquelle la première vanne de blocage (11) et la deuxième vanne de blocage (12) sont fermées pour bloquer l'entrée (110) et la sortie (120) et la vanne de purge (13) est ouverte pour relier la sortie de purge (130) à une liaison (14'), dans une position de passage, dans laquelle la première vanne de blocage (11) et la deuxième vanne de blocage (12) sont ouvertes pour relier l'entrée (110) à la sortie (120) via la liaison (14') et la vanne de purge (13) est fermée pour bloquer la sortie de purge (130), et inversement, dans laquelle la soupape de sécurité (10) est réalisée sous la forme d'un distributeur, dans laquelle le piston (25) est un piston creux (250) et présente une cavité (14) en tant que liaison (14'),
**caractérisée en ce que**
la soupape de sécurité (10) présente un corps de soupape (20) d'un distributeur 5/2 avec le piston creux (250), dans laquelle six joints (22, 22a, 22c) et cinq entretoises (23, 23a, 23b, 23c, 23d) sont insérés alternativement entre deux brides de maintien (21) dans un alésage intérieur (20a) du corps de soupape (20), dans laquelle chacune des entretoises (23, 23a, 23b, 23c, 23d) est disposée entre deux des joints (22, 22a, 22c) et dans laquelle les joints (22, 22a, 22c) assurent l'étanchéité en même temps par leur diamètre extérieur contre la paroi de l'alésage intérieur (20a) et par leur diamètre intérieur de parties du piston creux (250), et que,
dans la position de blocage, l'entrée (110) est reliée à un raccord supplémentaire (140), lequel raccord supplémentaire (140) est rétréci par une buse et une section transversale de sortie de la buse étant sensiblement plus petite qu'une section transversale du raccord supplémentaire (140).

2. Soupape de sécurité (10) pour un dispositif de nettoyage d'une installation de traite pour la traite d'animaux donnant du lait, présentant une première vanne de blocage (11) avec une entrée (110), une deuxième vanne de blocage (12) avec une sortie (120), une vanne de purge (13) avec une sortie de purge (130), un piston (25) et une unité d'entraînement (28), dans laquelle la soupape de sécurité (10) est conçue réglable d'une position de blocage, dans laquelle la première vanne de blocage (11) et la deuxième vanne de blocage (12) sont fermées pour bloquer l'entrée (110) et la sortie (120) et la vanne de purge (13) est ouverte pour relier la sortie de purge (130) à une liaison (14'), dans une position de passage, dans laquelle la première vanne de blocage (11) et la deuxième vanne de blocage (12) sont ouvertes pour relier l'entrée (110) à la sortie (120) via la liaison (14') et la vanne de purge (13) est fermée pour bloquer la sortie de purge (130), et inversement, dans laquelle la soupape de sécurité (10) est réalisée sous la forme d'un distributeur, dans laquelle le piston (25) est un piston creux (250) et présente une cavité (14) en tant que liaison (14'),
**caractérisée en ce que**
la soupape de sécurité (10) présente un corps de soupape (20) d'un distributeur 5/2 avec le piston creux (250), dans laquelle six joints (22, 22a, 22b, 22c) et cinq entretoises (23, 23a, 23b, 23c) sont insérés alternativement entre deux brides de maintien (21) dans un alésage intérieur (20a) du corps de soupape (20), dans laquelle chacune des entretoises (23, 23a, 23b, 23c, 23d) est disposée entre deux des joints (22, 22a, 22c) et dans laquelle les joints (22, 22a, 22b, 22c) assurent l'étanchéité en même temps par leur diamètre extérieur contre la paroi de l'alésage intérieur (20a) et par leur diamètre intérieur de parties du piston creux (250), et que,
dans la position de blocage, la cavité (14) du piston creux (250) est reliée par une première ouverture (14a) à la sortie de purge (130) et par une deuxième ouverture (14b) à un raccord supplémentaire (140).

3. Soupape de sécurité (10) selon la revendication 1 ou 2, **caractérisée en ce que** la cavité (250) s'étend dans la direction d'un axe longitudinal de piston (251) du piston creux (250).

4. Soupape de sécurité (10) selon la revendication 3, **caractérisée en ce que** la cavité (14) comprend une première ouverture (14a) et une deuxième ouverture (14b).

5. Soupape de sécurité (10) selon la revendication 3, **caractérisée en ce que**, dans la position de blocage, la première vanne de blocage (11) et la deuxième vanne de blocage (12) sont fermées par le piston creux (250) pour bloquer l'entrée (110) et la sortie (120) et la vanne de purge (13) relie la sortie de purge (130) à la cavité (14) du piston creux (250).

6. Soupape de sécurité (10) selon la revendication 4 ou 5, **caractérisée en ce que**, dans la position de passage, la première vanne de blocage (11) communique par la première ouverture (14a) avec la cavité (14) du piston creux (250) et la deuxième vanne de blocage (12) communique par la deuxième ouverture (14b) avec la cavité (14) du piston creux (250) pour relier l'entrée (110) à la sortie (120), et que la vanne de purge (13) est fermée par le piston creux (250) pour bloquer la sortie de purge (130).

7. Soupape de sécurité (10) selon la revendication 6, **caractérisée en ce que** le piston creux (250) est relié à un élément d'entraînement (280) pour déplacer le piston creux (250) de la position de blocage dans la position de passage de la soupape de sécurité (10) et inversement.

8. Soupape de sécurité (10) selon la revendication 7, **caractérisée en ce que** la soupape de sécurité (10) présente un élément d'accumulation d'énergie précontraint (27) qui précontraint le piston creux (250) dans la position de blocage et le maintient dans la position de blocage.

9. Soupape de sécurité (10) selon l'une des revendications précédentes, **caractérisée en ce que** la soupape de sécurité (10) présente une unité de détection (30) pour détecter la position de blocage et/ou la position de passage.

10. Soupape de sécurité (10) selon la revendication 9, **caractérisée en ce que** l'unité de détection (30) coopère avec le piston creux (250) directement et/ou indirectement par l'intermédiaire d'un élément d'entraînement (280).

11. Soupape de sécurité (10) selon la revendication 10, **caractérisée en ce que** l'unité de détection (30) coopère avec un élément magnétique (31) qui est monté sur le piston creux (250) et/ou l'élément d'entraînement (280).
